# EUROPÄISCHE PATENTSCHRIFT

(11) **EP 2 783 101 B1**
(45) Veröffentlichungstag und Bekanntmachung des Hinweises auf die Patenterteilung: **03.02.2016**
(21) Anmeldenummer: 12787467.5
(22) Anmeldetag: 20.11.2012
(51) Int. Cl.: F03B 17/06, F03D 3/06

(54) **STRÖMUNGSMASCHINE MIT EINEM ODER MEHREREN SCHAUFELRÄDERN MIT ZWANGSGEFÜHRTEN, BEWEGLICHEN SCHAUFELN.**
TURBOMACHINE HAVING ONE OR MORE BLADE WHEELS WITH POSITIVELY DRIVEN MOVING BLADES.
TURBOMACHINE POURVUE D'UNE OU DE PLUSIEURS ROUES À AUBES COMPRENANT DES AUBES MOBILES À GUIDAGE FORCÉ

(30) Priorität: 21.11.2011 IT BZ20110058
(43) Veröffentlichungstag der Anmeldung: 01.10.2014
(73) Patentinhaber: Pasetto, Piergiorgio, 39100 Bolzano (IT); Baroni, Carlo, 34139 Trieste (IT)
(72) Erfinder: PASETTO, Piergiorgio, 39100 Bolzano (IT)
(74) Vertreter: Ausserer, Anton
(86) Internationale Anmeldenummer: PCT/EP2012/073130
(87) Internationale Veröffentlichungsnummer: WO 2013/076094

(56) Entgegenhaltungen:
- WO-A1-80/00991
- WO-A2-2010/013126
- DE-C- 494 685
- FR-A1- 2 500 076
- US-A- 5 324 164
- US-A1- 2011 110 779
- US-A1- 2011 272 948

## Beschreibung

Die vorliegenden Erfindung bezieht sich auf eine Strömungsmaschine mit mindestens einem Schaufelrad mit zwangsgeführten Schaufeln gemäß dem Oberbegriff des Anspruchs 1.

Eine derartige Strömungsmaschine ist in der italienischen Patentanmeldung BZ 2008 A 000 030 vom 30. Juli 2008 beschrieben. In dieser Anmeldung ist jede Schaufelachse über Übertragungsmitteln mit einer auf der Schaufelradwelle drehbaren Pinole verbunden. Diese Übertragungsmittel, immer in dieser Anmeldung, werden durch ein Kegelrad, das an der Achse einer jeden Schaufel festliegt, durch ein Kegelrad, das mit diesem letzteren kämmt, durch eine Stange, die diese letztere trägt und vom Schaufelrad drehbar gelagert ist, von einem Schaufelrad, das von der Stange fest getragen wird, und einem Kegelrad, das fest von der Pinole getragen wird, gebildet. Auf diese Art und Weise waren die Schaufeln derart ausrichtbar, dass sie durch das Fluid mit einem hohen Wirkungsgrad in der Drehung des Laufrades um seine Welle herum umströmt werden. Es wurde nun gefunden, dass die Ausrichtung der einzelnen Schaufeln innerhalb des Fluids diversifiziert werden kann, um einen Schub von oder im Fluid zu erhalten, der unabhängig von der Drehzahl ist.

Die Aufgabe der vorliegenden Erfindung ist daher, weitere Lösungen für die koordinierte Ausrichtung der Schaufeln zu finden und gleichzeitig die Struktur der Strömungsmaschine kompakter und möglichst einfach zu gestalten.

Diese Aufgabe wird durch eine Strömungsmaschine mit zwangsgeführten Schaufelrädern mit den Merkmalen des Anspruchs 1 gelöst.

Die Ausrichtbewegung wird erhalten, indem jede Schaufelachse einzeln mit einem gegenüber der Schaufelradwelle beweglichen Glied über ein Gelenkviereck von Hebeln und Stangen verbunden werden, das in einer Ebene liegt, die sich senkrecht zur Schaufelachse befindet; wobei ein Arm des Gelenkviereckes zur Schaufelachse festliegend ist, ein weiterer Arm des Gelenkviereckes an einem Ende auf einer Ebene des Schaufelrades angelenkt ist, während er am anderen Ende mit dem Arm der Schaufel über eine Verbindungsstange verbunden ist; wobei der an der Ebene des Schaufelrades angelenkte Arm über ein Paar von Gleitstein-Führung, das auf der Gesamtheit des Stellglieds zwangsgeführt angelenkt und beweglich ist. Es liegt nahe, dass für jede Schaufel einzeln die ein und dieselbe Art von Gelenkviereck von Stangen und Hebeln und Gleitstein-Führung bis zum Stellglied wiederholt. Die gleichzeitige Drehmitnahme der am entsprechenden, dem Stellglied angehörenden Lagerring angebrachten Führungen in einer gegenüber der Bewegung des entsprechenden Schaufelrades zusammenfallenden Bewegung wird über eine Geometrie von Hebeln und Stangen sichergestellt, die deren freie Dezentralisierung in allen Richtungen gewährleisten. Es liegt überdies nahe, dass dieselben Mechanismen und Anlenkungen sich koordiniert für jedes Schaufelrad wiederholen.

In einer ersten Ausführungsform besteht das Stellglied aus einer Art von gelochten Glocke, die am Gehäuse der Maschine über eine Kugelaufnahme gelagert und angelenkt ist, die die Verschwenkung in allen Richtungen des Glockenkörpers erlaubt; wobei (zwei oder mehrere) Antriebsmittel ihrerseits sowohl am Maschinenkörper als auch auf dem Glockenkörper angelenkt und dazu vorgesehen sind, dieselbe mit einer Schwenkbewegung zu verstellen, die eine virtuelle Drehmitte besitzt, die in einer mittigen Achse der Maschine liegt, und derart ausgelegt ist, dass sie mit einer genauen und bestimmten Bewegung außermittig ausgerichtet werden kann.

An der Glocke ist ein Doppellagerring gleitend angeordnet, der die Schwenkbewegung in eine radiale Richtung umwandelt, die auf einer Ebene liegt, die zur mittigen Welle der Maschine senkrecht liegt. Der Doppellagerring selbst trägt nach außen ein radiales Lager für jedes Schaufelrad, an dem die gesamten jeweiligen Führungen- Gleitsteine einer jeden Schaufel des Viereckes fest angebracht sind.

In einer zweiten Ausführungsform fehlt hingegen die Glocke, der Lagerring ist nicht doppelt, sondern einfach, und, obwohl er eine zur mittigen Achse der Maschinen parallelen Achse beibehalten kann, kann er eine gesteuerte Dezentralisierungsverstellung oder außermittige Bewegung auf einer zur Maschinenachse senkrechten Ebene erfahren. Der Lagerring ist in Richtung seines Inneren mit einer Ringplatte vervollständigt, die vier gerade, zueinander senkrechte und gegenüber der Mitte der Achse des Lagerrings orthogonale und gleich beabstandete Langlöcher aufweist; in diesen Langlöchern bewegen sich Gleitsteine, die dazu ausgelegt sind, um den Lagerring selbst abzustützen und zu bewegen; jeder Gleitstein ist andererseits in seiner Mitte durch eine kleine Welle abgestützt und bewegt, die mit einer zur Achse des Lagerrings parallelen Achse angelenkt ist. Diese kleine Welle liegt an einem Hebel mit einer bogenförmigen zur Verstellebene des Lagerrings parallel Bewegung fest, der über eine Welle angebracht und bewegt ist, die eine der mittigen Achse der Maschine parallele Achse besitzt; diese Welle dreht sich und ist durch eine Aufnahme abgestützt, die an der Struktur der Maschine festliegt; im oberen Teil der Achse liegt ein zweiter Hebel fest, der seinerseits durch einen Antrieb bewegt wird, der an der Struktur der Maschine angelenkt ist. Klarerweise wiederholt sich dieses Hebel- und Wellensystem für jedes Langloch. Um die Verstellung des Lagerings optimal zu gestalten, sind vier Antriebe mit koordinierter Bewegung vorgesehen. Der Lagerring trägt am Außenteil radiale Lager in derselben Form und Funktionalität wie in der ersten Ausführungsform des Stellgliedes.

In eine dritten möglichen Steuerform der Ausrichtung ist möglich, in dem oberen Teil des Verstellgliedes zwei zueinander senkrechte Langlöcher vorzusehen, die mit dem Verstellglied verklemmt gleitend geführt durch zwei am Maschinengehäuse angelenkte Antriebe längs zwei zur Verstellung des Lagerrings parallele Ebenen bewegt werden. Die kombinierte Bewegung der beiden Langlöcher setzt die gewollte Dezentralisierung zusammen. Das Verstellglied ist durch das Langlochsystem selbst abgestützt.

Die Strömungsmaschine ist in ihrer Gesamtheit mit den langsamen Turbinen mit zur Fließrichtung des Fluids senkrechten Achse und mit üblicherweise zwei (auch einzeln oder mehreren) koaxialen Schaufelrädern (konzentrisch oder gegenüberliegend) arbeitend vergleichbar.

Die Strömungsmaschine ist hergestellt um einen Schub zu erzeugen oder um die im Fluidstrom (üblicherweise Wasser) in der sie wirkt ein Höchstmass an kinetischer Energie aufzufangen; das Merkmal liegt in der Möglichkeit, von null bis zu einem Höchstmass die ausgeübte Leistung unabhängig von der Richtung (jedenfalls steuerbar) und von der Drehzahl zu dosieren.

Jedes Schaufelrad besteht aus einem kreisförmigen Drehkörper und besitzt eine Anzahl von Schaufeln (zwei oder mehrere), die auf einem gedachten Kreis angeordnet und voneinander beabstandet sind, dessen Durchmesser als Teildurchmesser des Schaufelrades angenommen wird.

Auf jedem Schaufelrad sind Schaufeln mit einem optimalen hydrodynamischen Querschnitt angeordnet und jede ist auf ihrer eigenen zur mittigen Achse der Strömungsmaschine parallelen Drehachse mit einer glatten und wechselweisen Bewegung in allen beiden Richtungen ausrichtbar und wird über eine Geometrie von Mechanismen (unter den verschiedensten technisch bekannten) gesteuert, die vorgesehen und hergestellt ist, um gleichzeitig die genaue Winkelposition einer jeden Schaufel gegenüber den anderen des Schaufelrads festzulegen, das sie trägt, und in Abhängigkeit der Stromrichtung des Fluids. Alle Mechanismen betreffen einen einzigen, mittigen Lagerring, der zweckmäßig ausgerichtet die gleichzeitige und jeweilige Winkelausrichtung und unabhängig von den einzelnen Drehbewegungen der Schaufelräder erlaubt.

Die mechanischen Verbindungen der Bewegungen können je nach den zweckmäßigen Projektbedürfnissen gewählt werden, mit der einzigen Voraussetzung, dass die Ausrichtungswinkel derselben in Abhängigkeit des auferlegten Schubes oder des Auffangens der kinetischen Energie im Fluid und der Position eingehalten werden die von einem Moment zum anderen gegenüber der Drehung des eigenen Schaufelrades angenommen wird. Die Bewegung einer jeden Schaufel ist mit den Winkelschwenkungen des Fluids harmonisch und ohne plötzlichen Wiederausrichtungen, da sie verwirklicht wird, indem ein gedachter Verlauf (gleich synusoidal) verfolgt wird, der jenem einer Nocke variabler Form je nach Maß und Einstellung der Steuerung und in Ausrichtung zur Proportionierung der auferlegten oder im Fluid aufgenommenen Energie gleichgestellt werden kann. Die beigelegten Zeichnungen sind schematisch und beispielhaft für mechanischeGetriebe.

Die Ausrichtung einer jeden Schaufel ist organisiert, um sie um einen bestimmten Winkel um die eigene Achse in den beiden Richtungen und in Koordination mit der Drehung des eigenen Schaufelrades zu drehen. Dies gilt gleichzeitig für alle interessierten Schaufeln auf den Teilkreis des entsprechenden Schaufelrades.

Die beiden Schaufelräder sind jeweils zueinander gegensinnigdrehend. Dies beträgt verschiedene Vorteile: es bewirkt, die Verwindungsresultierende in Reaktion des Fluids zu vermeiden, die dazu neigt, die gesamte Strömungsmaschine auch gegenüber der sie tragende Basis zu drehen; es wird die Resultierende der verschiedenen Zugkräfte der Schaufeln im Bereich der Drehachse zentriert, wobei die Verwendung einer einzigen Strömungsmaschine anstatt zwei zueinander liegenden und gegensinnig drehenden erlaubt wird; es werden keine Seitenverschiebungseffekte erzeugt, die von der auferlegten Richtung abdriften; es erlaubt kürzere Schaufeln und daher begrenztere Strukturbelastungen.

Die Drehwinkelgeschwindigkeit des Schaufelrades mit größerem Durchmesser ist üblicherweise langsamer als jene mit kleinerem Durchmesser, dies um mehr oder weniger dieselbe Umfangsgeschwindigkeit zwischen den Schaufelrädern einzuhalten, die zur Dynamik des interessierten Fluids proportional ist. Die Winkelgeschwindigkeit eines jeden einzelnen Schaufelrades kann unabhängig oder koordiniert mit einem genauen Verhältnis zwischen beiden Schaufelrädern sein. Je nach dem Fall kann daher die mechanische Wahl einer freien Zuordnung mit zwei Kraftausgängen/-eingängen, mit differentialen oder proportionalen gebunden getroffen werden.

Die Gegendrehung der beiden Schaufelräder beträgt eine auf den Schaufeln abgewinkelte dynamische Kraft, die je nach ihrer Position und Neigung und unter Umleitung des interessierten Stromanteils, mit synergetischen verbessernden Effekt das Fluid auf die anliegenden und nachfolgenden Schaufeln zwischen einem Schaufelrad und einem anderen Schaufelrad bis einer vollständigen Durchquerung des Systems leiten. Die Form ist ein hydrodynamisches Profil, mit Abmessungen, die zwischen den beiden Schaufelgruppen für jedes Schaufelrad geändert werden können. Abmessungen der Strömungsmaschine, der Schaufelräder, sowie die Abmessung, die Form und die Anzahl der Schaufeln, hängen von der vorgesehenen Leistung und von den physikalischen Merkmalen des Fluids und der Arbeitsumgebung ab. Die Konstruktionsmaterialien der Maschine werden daher zufolge einer angemessenen und gezielten Projektierung gewählt.

Die Strömungsmaschine ist üblicherweise für die Betriebsweise mit vertikaler Achse vorgesehen, sie kann jedoch in Abhängigkeit mit einer beliebigen Anordnung und Winkelstellung Verwendung finden, mit der einzigen Voraussetzung, dass die Achse zur Fluidrichtung orthogonal ist. Der Vorteil gegenüber anderen Maschinen ist daher der, dass man so bequem nur die Schaufeln auch mit der Maschine in voller Funktion und Kraft ausgerichtet werden, ohne die Gesamtheit auszurichten, mit erheblichen Vorteilen der Geschwindigkeitsdynamiken in Reaktion auf die Bedienung, die Abmessungen und die Strukturen.

Wird auf die Einstellung und die Ausrichtung der Schaufeln eingewirkt, kann die fluidodynamische Kraft beliebiger Größe eingerichtet werden, unabhängig in einer beliebigen Richtung auf 360 Grad. Die Wirkung ist immer mittig auf die Achse, stetig, einstellbar von null bis zu einem Maximum auch mit dem Motor bei konstanter Umlaufzahl, und in Abwesenheit von Vibrationen, dank der immer regelmäßigen und harmonischen Schwingungen der Schaufeln (ohne Rückkehr von gewaltsamen neuer Winkelausrichtung) im Verlauf der Drehung des Schaufelrades. Harmonie und Fluidität der Bewegungen kann eine eventuelle Erhöhung der Drehzahl gegenüber anderen Systemen erlauben.

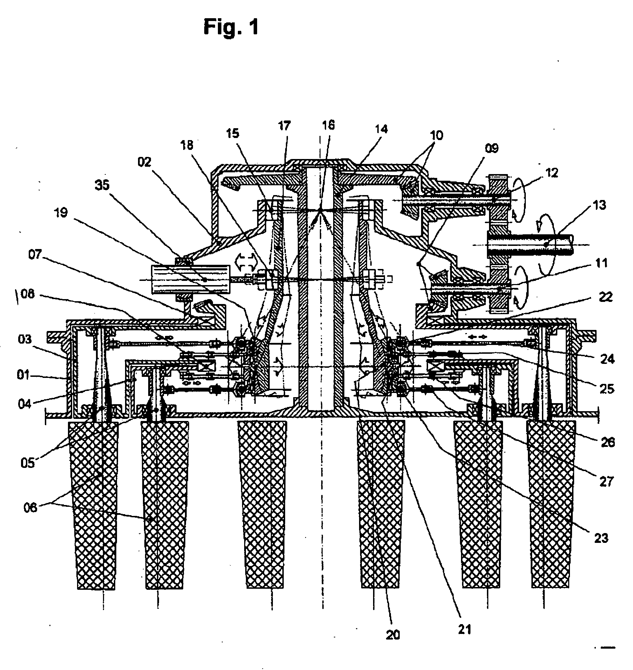

Weitere Merkmale und Einzelheiten gehen aus den Patentansprüchen und aus den beigefügten Zeichnungen hervor. In der Zeichnung zeigen
Figur 1 schematisch eine erfindungsgemäße Strömungsmaschine in einem Axialschnitt in einer ersten Ausführungsform,

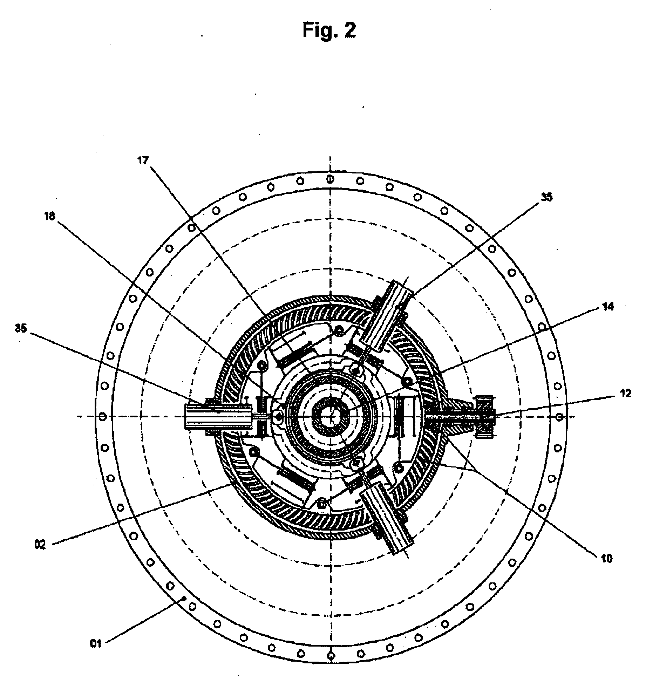

Figur 2 einen Querschnitt bzw. zur Wellenachse aus Figur 1 im senkrechten Schnitt,

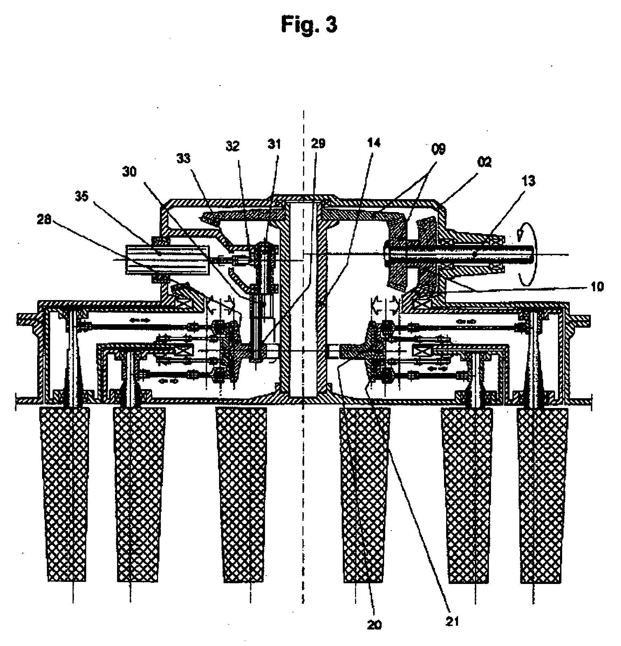

Figur 3 schematisch eine erfindungsgemäße Strömungsmaschine im Axialschnitt, in einer zweiten Ausführungsform,

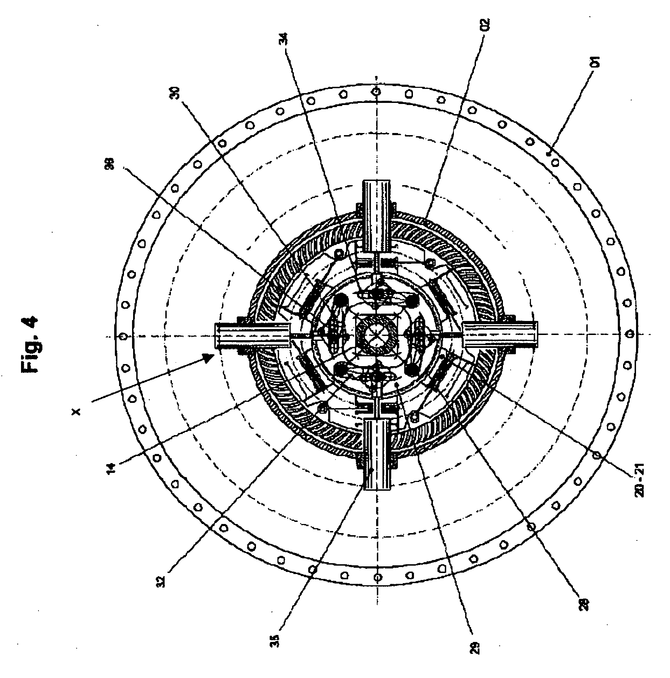

Figur 4 einen Querschnitt aus Figur 3,

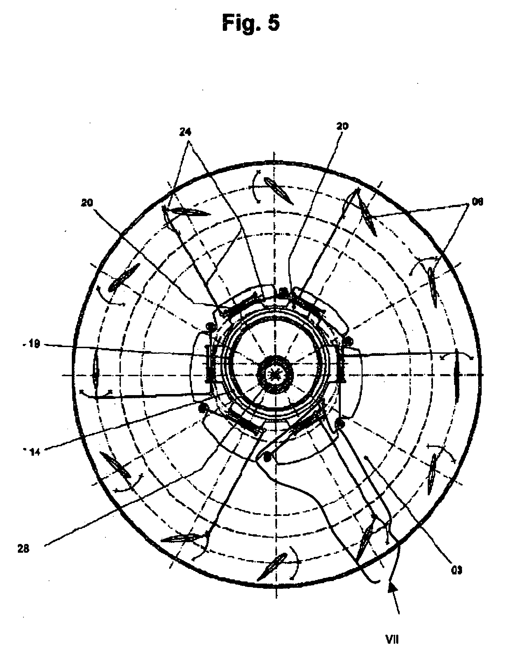

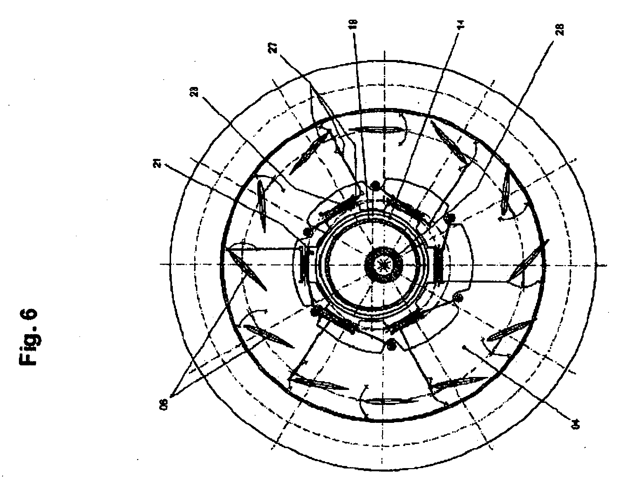

Figur 5 und 6 weist eine schematische Stirnansicht der erfindungsgemäßen Strömungsmaschine in zwei verschiedenen Arbeitspositionen des Innenschaufelrades und des Außenschaufelrades,
Figur 7 ein schematisches Schaubild der Einzelheit aus Figur 5,

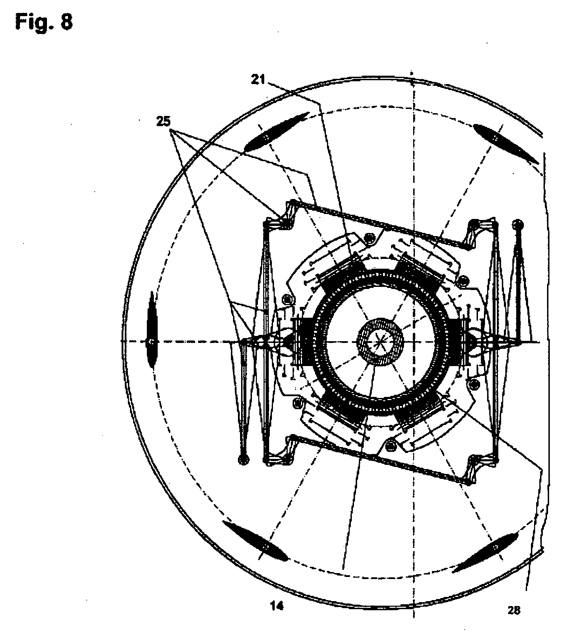

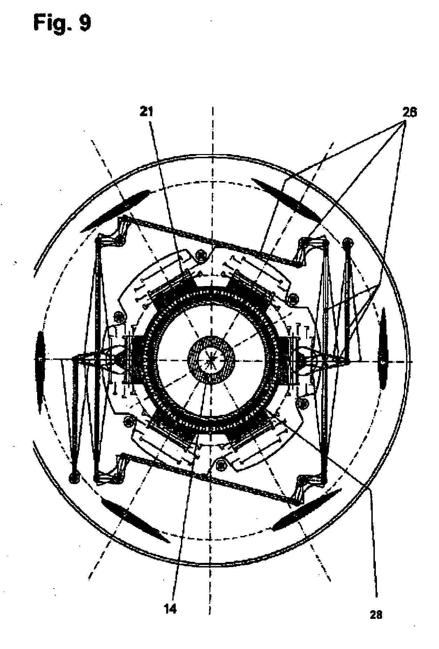

Figur 8 und 9 schematisch eine Teilstirnansicht eines äußeren bzw. inneren Schaufelrades mit Steuergestänge des Gleitsteines,
Figur 10 schematisch im Schaubild die Einzelheit X aus Figur 4, und
Figur 11 schematisch schaubildlich das Gestänge der Schaufelräder für die Mitnahme von Führungstragringen der Gleitsteine in Übereinstimmung der Drehung des entsprechenden Schaufelrades.

Wie in den Figuren gezeigt ist mit der Bezugsziffer 1 in ihrer Gesamtheit eine erfindungsgemäße Strömungsmaschine angegeben. In dieser sind Schaufelräder 3 und 4 in ihrem Betrieb abgestützt. Die Strömungsmaschine selbst kann ihrerseits an einem festen oder beweglichen Aufbau je nach Zuordnung der Arbeit angewandt sein.

Die Strömungsmaschine 1 weist ein Gehäuse 2 auf, dessen verlängerter Teil mechanische Krafteingänge, die Drehung der Schaufelräder und die mittige Koordinierung der Ausrichtung der Schaufeln enthalten hat.

Im Gehäuse 2 ist das Außenlaufrad 3 und das Innenlaufrad 4 aufgenommen, die zueinander konzentrisch sind. Diese können zueinander auch gegenüberliegend angeordnet sein. Jedes Schaufelrad ist mit einem Wellenkreis 5 versehen, der Schaufeln 6 trägt. Zweckmäßigerweise ist das Außenschaufelrad 3 drehbar durch ein Lager gelagert, das im Gehäuse 2 angeordnet ist. Das Innenschaufelrad 4 ist hingegen drehbar von einem Lager 8 getragen, das im größeren Schaufelrad derart angeordnet ist, dass das kleinere Schaufelrad 4 an dem größeren Schaufelrad 3 gedreht werden kann. Über ein Doppelkegelrad 9 ist das Außenschaufelrad 3 mit außen verbunden. Das Verhältnis ist in Abhängigkeit der vorgesehenen Winkelgeschwindigkeit und bezügliche des Innenschaufelrades 4 ausgelegt. Das Innenschaufelrad 4 wird von einer Welle 14 bewegt und ist drehbar über ein Kegelradpaar 10 mit außen verbunden. Das Verhältnis ist in Abhängigkeit der vorgesehenen Winkelgeschwindigkeit und bezüglich des Außenschaufelrades 3 ausgelegt.

Das Kegelradpaar 9 ist mit einem Kraft- und Dreheingangsritzel 11 des Außenlaufrades 3 verbunden, während das Kegelradpaar 10 mit einem Kraft- und Dreheingangsritzel 12 des Innenschaufelrades 4 verbunden ist. Mit den Ritzeln 11 und 12 kämmt das Zahnrad 13 einer Antriebswelle. Das Verhältnis mit dem Eingangsritzeln der Schaufelräder ist in Abhängigkeit der vorgesehenen Winkelgeschwindigkeit ausgelegt. Von Wichtigkeit ist die gezielte Paarung mit der Drehrichtung der jeweiligen Schaufelräder. Es können einzelne Antriebseingänge pro Schaufelrad oder eine Differentialpaarung vorgesehen sein.

Das Innenschaufelrad 4 liegt an einer mittigen Verbindungswelle 14 fest, die fest den Kegelkranz des Kegelradpaares 10 trägt.

Ein Kugelgelenklagerring 15 ist auf einer Ausricht- und Bewegungsglocke 17 angeordnet. Dieser ist durch das Gehäuse 2 abgestützt und erlaubt die Schwenkung der Glocke 17 in alle Richtungen. Es erlaubt nicht die Drehung der Glocke auf sich selbst, sondern ihre Verschwenkung um einen mittigen Ausrichtdrehpunkt 16 der Steuerglocke 17.

Die in 15 angelenkte Bewegungsglocke wird über einen angelenkten 118 durch Antriebe 35 gesteuert, die mit ihrer kombinierten Bewegung die genaue gut kontrollierte Schwingung festlegen.

Ein Kugelgelenklagerring 19 trägt an der Basis der Glocke 17 jeweilige Ringe 20 und 21 unter Zwischenschaltung eines Lagers 220, das an der Außenfläche des Lagerrings 19 festliegt. Am Ring 20, der für das Außenschaufelrad 3 vorgesehen ist, liegt jeweils eine Führung 22 fest, in der ein Hebel eines Hebelwerkes 25 gleitet, das mit jeder Schaufel 6 des Außenschaufelrades 3 verbunden ist.

Am Ring 21 ist für das Innenschaufelrad 9 jeweils eine Führung 23 fest, in der der Hebel eines Hebelwerkes 26 läuft, das mit jeder Schaufel 6 des Innenschaufelrades 4 verbunden ist.

Die Führung 22 (eine für jede Schaufel) des Außenschaufelrades 3 erlaubt die kontrollierte Bewegung der Hebel 24 der Schaufel in zwei Richtungen, ohne sich mit anderen Richtungen auf der Ebene des Schaufelrades zu überschneiden.

Die Führung 23 (eine pro Schaufel) des Innenschaufelrades 4 erlaubt die kontrollierte Bewegung der Hebel 27 in zwei Richtungen, ohne sich mit den anderen Richtungen auf der Ebene des Schaufelrades zu überschneiden.

Das Hebelwerk 24 (eines pro Schaufel) zur Bewegung der Schaufeln des Außenschaufelrades 3 wird durch die entsprechende Führung 22 betätigt, wobei der Winkel der Schaufel bei jedem Umdrehungsanteil des Schaufelrades gesteuert wird. Es ist in den Drehpunkten auf dem entsprechenden Schaufelrad fest.

Ein Hebelwerk 25 zur Mitnahme des Lagerrings 20 liegt in den Drehpunkten fest und wird seinerseits vom Außenschaufelrad 3 mitgenommen.

Ein Hebelwerk 26 zur Mitnahme des Lagerrings 21 ist in den Drehpunkten fest und wird seinerseits vom Innenschaufelrad 4 mitgenommen.

Ein Hebelwerk 27 (eines pro Schaufel) zur Bewegung der Schaufel des Innenschaufelrades 4 wird durch einen entsprechenden Schiebedrehpunkt 29 getätigt, der im Winkel der Schaufel bei jedem Umlaufanteil des Schaufelrades steuert. Es liegt in den Drehpunkten auf dem entsprechenden Schaufelrad fest.

Ein mittiger Lagerring 28 ist durch Schiebedrehpunkte 29 abgestützt und bewegt, die in entsprechenden Langlöchern 34 gleiten und trägt die entsprechenden Ringe 20 und 21 der Schaufelräder 3 und 4.

Vier Schiebedrehpunkte 29 zum Stützen und Bewegen des mittigen Lagerrings 28 und werden von entsprechenden, unteren Hebeln 30 gesteuert.

Die vier unteren Bewegungshebel 30 des Schiebedrehpunktes 29, außer dass sie diesen bewegen, stützen den mittigen Lagerring 28 ab. Sie sind durch eine entsprechende Welle 31 gesteuert und aufgehängt.

Vier Steuer- und Abstützwellen 31 der unteren Hebel 30 werden durch obere Hebel 32 drehgesteuert und sind jeweils in einem Halter 33 angelenkt.

Vier obere Bewegungshebel 33 der Welle 31 werden durch ein Antriebssystem 35 gesteuert.

Vier Halter- und Anlenkträger der Gesamtheit Hebel und Welle 30) 31) 32) liegen am verlängerten Teil des oberen Körpers frei fest.

Vier Langlöcher 34 des Schiebedrehpunktes 29 sind Teil des mittigen Bewegungslagerrings 28.

Die vier Antriebe sind um 90 Grad versetzt von oben gesehen angeordnet. Sie sind am Körper 2 angelenkt. Ihre koordinierte Bewegung durch Einwirken auf die Hebel 32, erlaubt eine sehr genaue und kontrollierte Bewegung des mittigen Lagerrings 28.

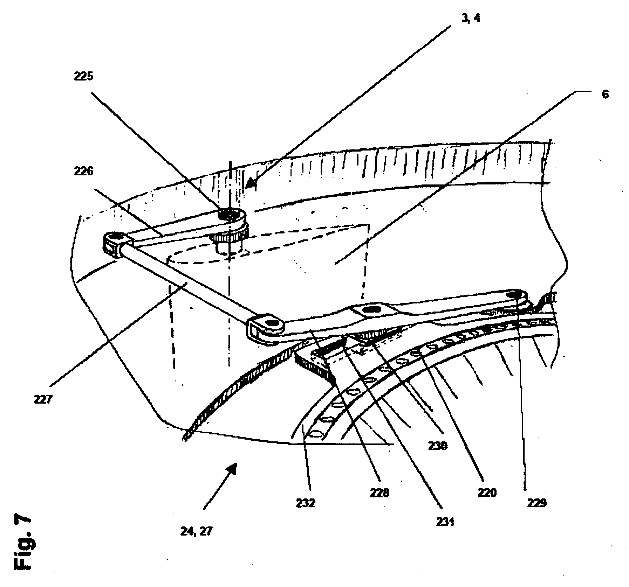

In Figur 7 ist beispielsweise ein Hebelwerk dargestellt, das in ein Viereck 24, 27 sowohl für die Schaufel 6 des Innenschaufelrades 4 als auch für das Außenschaufelrad 3 besteht. An jeder Schaufelachse 225 ist eines der Enden eines Armes 226 angelenkt, dessen andere Ende an einem der Enden einer Verbindungsstange 227 angelenkt ist, dessen anderes Ende an einem der Enden eines Hebels 228 angelenkt ist, der an einer Anlenkstelle 229 am Boden des entsprechenden Schaufelrades 3, 4 angelenkt ist. Der Hebel 228 ist wippartig an einem Gleitstein 230 angelenkt, der in einer Führung 231 gleitet, die am drehbaren Lagerring am Lager 220 festliegt.

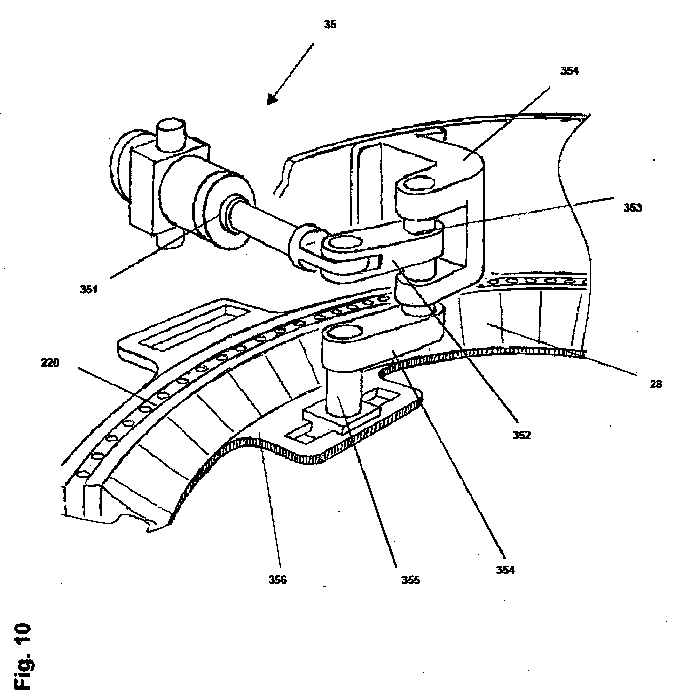

In der Figur 10 ist ein Antriebssystem 35 gezeigt, bei dem jeder Antrieb 351 eine Kolbenstange aufweist, deren freien Ende eines der Enden eines Arms 352 angelenkt ist, dessen anderes Ende an einem Bolzen 353 angelenkt ist, der an einem Flansch 354 drehbar ist, der am Gehäuse der Maschine festliegt. Ein Ende des Bolzens 353 ist an einem der Enden eines Arms 354 angelenkt, dessen anderes Ende an einem Bolzen 355 angelenkt ist, der in einer am Lagerring 28 festliegenden Aufnahme 356 angelenkt ist.

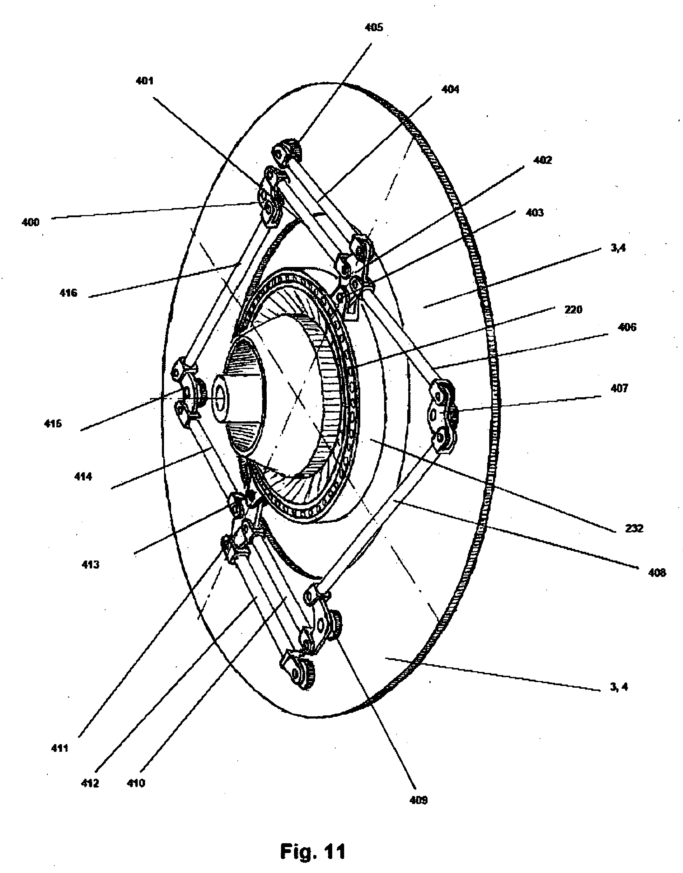

Aus Figur 11 ist eine bevorzugte Mitnahmeform der Gesamtheit Lagerring-Langlöcher-Gleitsteine in Übereinstimmung mit dem entsprechenden Schaufelrad.

Darin ist an jedem Schaufelrad 3, 4 an seinem Boden eines der Enden eines ersten Winkelhebels 400 angelenkt, an dessen anderen Ende eine erste Stange 401 angelenkt ist, die ihrerseits an einer Lasche 402 angelenkt ist, die überdies an einer am Ring 232 festliegenden Nase 403 angelenkt ist. An der Lasche 402 ist überdies ein erster Ausrichthebel 404 angelenkt, der in 405 am Boden des Schaufelrades 3, 4 angelenkt ist. An der Lasche 402 ist überdies eine zweite Stange 404 angelenkt, die ihrerseits überdies an einem zweiten Winkelhebel 407 angelenkt ist, an dem eines der Enden einer dritten Stange 408 angelenkt ist, dessen anderes Ende an einem dritten Winkelhebel 409 angelenkt ist, an dem eine vierte Stange 410 angelenkt ist, die an einer zweiten Lasche 411 angelenkt ist, an der überdies ein zweiter Ausrichthebel 412 angelenkt ist, und die an einer am Ring 232 festliegenden Nase 413 angelenkt ist und an der eine fünfte Stange 414 angelenkt ist, die ihrerseits an einem vierten Winkelhebel 415 angelenkt ist, der überdies am schon genannten ersten Winkelhebel 400 angelenkt ist.

## Patentansprüche

1. Strömungsmaschine, umfassend ein Gehäuse (2), mindestens zwei vom Gehäuse (2) drehbar aufgenommene Schaufelräder (3, 4), mindestens zwei drehbar angeordnete Schaufeln (6), die längs eines Kreises der mindestens zwei Schaufelräder (3, 4) gleichförmig verteilt und mit einer zur Achse des entsprechenden Schaufelrades parallelen Achse gelagert sind, wobei die Welle eines ersten Laufrades (4) mit Bewegungsabnahmemitteln (10) verbunden ist und das zweite Schaufelrad (3) Kraftabnahmemittel auf seinem mit einem Boden der Welle des ersten Schaufelrades (4) konzentrischen Boden aufweist, wobei die Bewegungsabnahmemittel des ersten Schaufelrades und des zweiten Schaufelrades in einer gemeinsamen Abnahmewelle (13) in Überlagerung der beiden Bewegungsbnahmemitteln vereint sind, **dadurch gekennzeichnet, dass** jede Schaufelachse (6) mit einem Verstellglied (22, 23) verbunden ist, das gegenüber der Welle (14) des zweiten Schaufelrades (4) über ein Gelenkviereck verschiebbar ist, das in einer zur Schaufelachse(225) senkrechten Ebene liegt und hauptsächlich aus einem an der Achse der Schaufel festliegenden Viereckarm besteht, wobei ein Viereckarm am Boden des Schaufelrades (3,4) angelenkt ist, während das andere Ende mit dem Ende des ersten Viereckarmes über eine Verbindungsachse verbunden ist, wobei der am Boden des Schaufelrades angelenkte Arm zwangsgeführt an einem Gleitstein (230) angelenkt ist, der in einer am Verstellglied festliegenden Führung verschiebbar ist, wobei das mit der Drehung des Schaufelrades kombinierte System Gleitstein-Führung (231) eine Steuerung der entsprechenden Schaufel mit einem harmonischen Verlauf gemäß einer Krümmung erlaubt, die ähnlich einer Sinuslinie mit einer mit dem Teilkreis des Schaufelrades zusammenfallend Achse veränderbar ist.

2. Strömungsmaschine nach Anspruch 1, **dadurch gekennzeichnet, dass** die zusammenfallende Bewegung des Lagerrings eines jeden entsprechenden Schaufelrades, auf dem die Gleitstein-Führungspaare für die Steuerung der Anlenkungen der Schaufelvierecke und das Schaufelrad selbst angebracht sind, durch ein Hebelsystem und Stangen verwirklicht ist, dessen Bindungs- und Anlenkgeometrie den Winkelgleichlauf zwischen Lagerring und dem entsprechenden Schaufelrad erlaubt, wobei jedoch der Lagerring selbst frei gelassen wird, gleichzeitig in allen auf der Ebene der Ausrichtungen vorgesehenen Richtungen bewegt zu werden.

3. Strömungsmaschine nach den vorstehenden Ansprüchen, **dadurch gekennzeichnet, dass** das Verstellglied aus einer gelagerten und angelenkten Glocke besteht, die mit einer in einer entsprechenden Aufnahme des Maschinengehäuses aufgenommenen Kugelfläche versehen ist; wobei Antriebsmittel vorgesehen sind, um die Glocke mit Drehpunkt in einer auf der mittigen Achse der Strömungsmaschine liegenden Drehmitte derart zu drehen, dass die Glocke außermittig pendeln kann; wobei auf derselben ein Lagerring in einer Richtung gleitend angeordnet ist, die in einer zur Schaufelradwelle senkrechten Ebene liegt, wobei der Lagerring selbst jeweils für jedes Schaufelrad ein Lager in einer gegenüber der Schaufelradwelle radialen Richtung aufgenommen ist, wobei durch die Welle über Gleitstein-Führungen Paare die jeweiligen Vierecke der Hebel der Schaufeln bewegt werden, wobei der gedachte Pendeldrehpunkt der Glocke und die Anlenkung der Antriebe in der Positionierung umgekehrt werden können, zur Ausnahme die Wirksamkeit der Dezentrierung des Gleitstein-Führungen-Lagerrings.

4. Strömungsmaschine nach Anspruch 1, **dadurch gekennzeichnet, dass** der Lagerring anderseits mit einem System von Gleitsteinen bewegt werden kann, die in eigens dafür vorgesehenen Langlöchern gleitbar sind, und zweckmäßigerweise in der Geometrie des Lagerrings ausgenommen sind, wobei jeder Gleitstein an der Mitte mit einer kleinen Welle angelenkt ist, die radial und parallel zur mittigen Achse der Maschine angelenkt ist, wobei die Achse an einem Hebel festliegt, mit einer bogenförmigen Bewegung auf einer Ebene, die parallel zu jener des Schaufelrades ist, die ihrerseits durch eine Welle festliegt und bewegt wird, mit einer zur mittigen Achse parallelen Achse, die an einer Aufnahme der Maschinenstruktur angelenkt ist und mit einem Arm versehen ist, der von einem Antrieb bewegt wird, der an der Struktur der Maschine angelenkt ist.

5. Strömungsmaschine nach Anspruch 1, **dadurch gekennzeichnet, dass** sie aus mehreren gegensinnig sich drehenden Schaufelrädern zusammengesetzt ist, mit synergetischem Verhalten der Schaufeln im Fluid, wobei dies mit den zweckmäßigen Winkelgeschwindigkeiten kombiniert die Reaktions-, Verwindungs-, und Driftwirkungen von der Richtung abweichende auf ein Minimum setzt, sowie den Schub beliebigen Ausmaßes auf der Drehachse zum Zusammenfallen bringt.

6. Strömungsmaschine nach den vorstehenden Ansprüchen, **dadurch gekennzeichnet, dass** das Hebelwerk aus einem Viereck (24, 27) sowohl für die Schaufel (6) des Innenschaufelrades (4) als auch für das Außenschaufelrad (3) besteht, wobei an jeder Schaufelachse (225) ist ein Ende eines Arms (226) angelenkt ist, dessen andere Ende an einem der Enden einer Verbindungsstange (227) angelenkt ist, dessen anderes Ende an einem der Enden eines Hebels (228) angelenkt ist, der in einer Anlenkstelle (229) am Boden des entsprechenden Schaufelrades (3, 4) angelenkt ist, wobei der Hebel (228) wippartig an einem Gleitstein (230) angelenkt ist, der in einer Führung (231) verschiebbar ist, die am Ring oder Lagerring (232) im Lager (220) verschiebbar ist.

7. Strömungsmaschine nach den vorstehenden Ansprüchen, **dadurch gekennzeichnet, dass** das Antriebssystem (3) Antriebe (351) umfasst, die eine Kolbenstangeaufweisen, an deren freiem Ende eines der Enden eines Arms (352) angelenkt ist, dessen anderes Ende an einem Drehbolzen (353) in einem Flansch (354) angelenkt ist, der am Maschinengehäuse festliegt, wobei ein Ende des Bolzens (353) an einem der Enden eines Arms (354) angelenkt ist, dessen andere Ende an einem Bolzen (355) angelenkt ist, der in einer an der Glocke (17) festliegenden Aufnahme (356) aufgenommen ist.

8. Strömungsmaschine nach den vorstehenden Ansprüchen, **dadurch gekennzeichnet, dass** an jedem Schaufelrad (3, 4) an dessen Boden eines der Enden eines ersten Winkelhebels (400) angelenkt ist, an dessen anderem Ende eine erste Stange (401) angelenkt ist, die ihrerseits an einer Lasche (402) angelenkt ist, die überdies an einer Nase (403) angelenkt ist, die am Ring (232) fest liegt, wobei an der Lasche (402) überdies ein erster Ausrichthebel (404) angelenkt ist, der in (405) am Boden des Schaufelrades (3, 4) angelenkt ist, wobei an der Lasche (402) überdies eine zweite Stange (404) angelenkt ist, die ihrerseits überdies an einem zweiten Winkelhebel (407) angelenkt ist, an dem eines der Enden einer dritten Stange (408) angelenkt ist, dessen anderes Ende an einem dritten Winkelhebel (409) angelenkt ist, an dem eine vierte Stange (410) angelenkt ist, die ihrerseits an einer zweiten Lasche (412) angelenkt ist, an der überdies ein zweiter Ausrichthebel (412) angelenkt ist und die an einer zweiten, am Ring (232) festliegenden Nase (413) angelenkt ist und indem eine vierte Stange (414) angelenkt ist, die ihrerseits an einem vierten Winkelhebel (415) angelenkt ist, der überdies am schon erwähnten ersten Winkelhebel (400) angelenkt ist.

## Claims

1. Fluid dynamic machine with at least one impeller, comprising a body (2) at least one impeller (3, 4), rotatably housed by the body (2), at least two blades (6) rotatably arranged, uniformly distributed along a circumference of the at least one impeller (3, 4) and supported with a parallel axis to the axis of the impeller, the shaft of a first impeller (4) being connected to motion transmission means (10) and the second impeller (3) having force transmission means on its bottom concentric with the bottom of the shaft of the first impeller, the motion transmission means of the first impeller and of the second impeller being joined in a common drive shaft (13) overlapping the two motion transmission means, **characterised in that** each blade axis (6) is connected with an element (22, 23) that can be moved with respect to the shaft of the second impeller (4) through a four-bar mechanism resting in a perpendicular plane to the axis of the blade mainly comprising an arm of the four-bar mechanism integral with the axis of the blades, an arm of the four-bar mechanism being pivoted on the bottom of the impeller, whereas the other end is connected to the end of the first arm through a connection axis, the arm hinged on the bottom of the impeller being desmodromically articulated to a sliding block in an integral guide with the movement element, the block-guide system combined with the turning rotation allowing a control of the respective blade with harmonic motion according to a variable curve similar to a sine curve with an axis coinciding with the primitive circumference of the impeller.

2. Machine according to claim 1, **characterised in that** the coinciding motion of the bearing collars of each respective impeller on which the block-guide pairs are mounted for the control of the articulations of the four-bar mechanism-blades, and the impeller itself, is actuated by a system of leverages and rods whose geometry of constraints and couplings allows the angular synchrony between collar-bearing and respective impeller, but leaving the same bearing collar free to be moved at the same time in all the directions envisaged on the orientation plane.

3. Machine according to one of the previous claims **characterised in that** the movement element comprises a supported and articulated carrier, being equipped with a spherical surface housed in a corresponding housing of the machine body; actuating means are provided to move the carrier with its pivot in a centre of rotation resting on the central axis of the machine, so as to be able to eccentrically oscillate the carrier; on the latter a collar is arranged in a sliding manner in a direction resting in a plane at right angles to the shaft of the impeller; wherein the collar itself mounts respectively for each impeller a bearing in a radial direction with respect to the shaft of the impeller, from which the respective four-bar mechanisms of the blade leverages are moved through the block-guide pairs; wherein the virtual pivot of the oscillation of the carrier and the articulation of the actuators, can be inverted in the positioning, while maintaining the decentralisation efficacy of the block-guide collar.

4. Machine according to claim 1 **characterised in that** the collar can otherwise be moved with a system of blocks sliding in special integral slots appropriately obtained in the geometry of the collar; wherein each block is articulated to the centre with a radially arranged shaft and parallel to the central axis of the machine, which is integral with a lever with an arch movement on a plane parallel to that of the impeller, which in turn is integral and moved by a shaft with a parallel axis to the central one, articulated to a housing of the machine structure and equipped with an arm moved by an actuator articulated to the machine structure.

5. Machine according to claim 1, **characterised in that** it can also comprise a number of counter-rotating impellers with synergic behaviour to the blades in the fluid; this combined with the appropriate angular speeds of each impeller minimises the reactive, torsional and direction drifting effects, as well as making the thrust of any entity coincide on the axis of rotation.

6. Machine according to one of the previous claims, **characterised in that** the leverage system consists of a four-bar mechanism (24, 27) both for the blade (6) of the internal impeller (4) and for the external one (3), one of the ends of an arm (226) being articulated to each blade axis (225), the other end of the arm being articulated to one of the ends of a connection rod (227) whose other end is articulated to one of the ends of a lever (228) articulated in a pivoted point (229) to the bottom of the respective impeller (3, 4), the lever (228) being articulated in a rocking-lever fashion to a block (230) sliding in a guide (231) integral with the ring or collar (232) rotating on the bearing (220).

7. Machine according to one of the previous claims, **characterized in that** the system of actuators (3) comprises actuators (351) having a piston stem at the free end of which one of the ends of an arm (352) is articulated, whose other end is articulated to a pivot (353) rotatable in a flange (354) integral with the body of the machine, one end of the pivot (353) being articulated to one of the ends of an arm (354) whose other end is articulated to a pivot (355) housed in a housing (356) integral with the carrier 17.

8. Machine according to one of the previous claims, **characterised in that** to the bottom of each impeller (3, 4) one of the ends of a first elbow lever (400) is articulated at whose other end a first rod (401) which is articulated in turn to a shackle (402) which is also articulated to a lug (402) integral with the ring (232), a first orientation lever (404) also being articulated to the shackle (402) articulated (405) to the bottom of the impeller (3, 4), a second rod (404) also being articulated to the shackle (402) in turn also articulated to a second elbow lever (407) to which one of the ends of a third rod (408) is articulated, whose other end is articulated to a third elbow lever (409) to which a fourth rod (410) is articulated joined to a second shackle (411) to which a second orientation lever (412) is also articulated and it is articulated to a second lug (413) integral with the ring (232) and to which a fifth rod (414) is articulated in turn articulated to a fourth elbow lever (415) which is also articulated to the aforementioned first elbow lever (400).

## Revendications

1. Machine fluidodynamique avec au moins une roue à palettes, comprenant un corps (2), au moins une roue (3, 4) accueillie de façon tournante dans le corps (2), au moins deux palettes (6) placées de façon tournante, distribuées uniformément le long d'un cercle de l'au moins une roue (3, 4) et supportées avec axe parallèle à l'axe de la roue, l'arbre d'une première roue (4) étant relié avec des moyens de prise de mouvement (10) et la deuxième roue (3) présentant des moyens de prise de force sur son fond concentrique par rapport au fond de l'arbre de la première roue, les moyens de prise de mouvement de la première roue et de la deuxième roue étant réunis sur un arbre de prise commun (13) où se superposent les deux moyens de prise de mouvement, **caractérisé en ce que** chaque axe de palette (6) est relié avec un organe (22, 23) déplaçable par rapport à l'arbre de la deuxième roue (4) par le biais d'un quadrilatère articulé gisant dans un plan perpendiculaire à l'axe de la palette composé principalement d'un bras de quadrilatère solidaire de l'axe des palettes, un bras de quadrilatère pivotant sur le fond de la roue, tandis que l'autre extrémité est reliée à l'extrémité du premier bras par le biais d'un axe de liaison, le bras pivotant sur le fond de la roue étant articulé de façon desmodromique à un coulisseau glissant dans un guide solidaire de l'organe de déplacement, le système coulisseau-guide combiné avec la rotation de roue permettant une commande de la palette respective avec un mouvement harmonique selon une courbe variable semblable à une sinusoïde avec l'axe coïncidant avec le cercle primitif de la roue.

2. Machine selon la revendication 1, **caractérisée en ce que** le mouvement coïncidant des collets à palier de chaque roue respective sur lesquels sont montés les couples coulisseau-guide pour la commande des articulations des quadrilatères-palettes, et la roue elle-même, est actionné par un système de levages et de barres la géométrie des contraintes et des articulations desquels permet la synchronisation angulaire entre coulisser-palier et la roue respective, tout en laissant libre le même collet de palier d'être déplacé simultanément dans toutes les directions prévues sur le plan des orientations.

3. Machine selon l'une des revendication précédentes, **caractérisée en ce que** l'organe de déplacement est composé d'une cloche supportée et articulée, pourvue d'une surface sphérique accueillie dans un siège correspondant du corps de machine; des moyens d'actionnement étant prévus pour déplacer la cloche avec pivot dans un centre de rotation gisant sur l'axe centrale de la machine, de façon à pouvoir basculer la cloche excentriquement; un collet étant placé de façon coulissante sur la cloche même dans une direction gisante dans un plan orthogonal à l'arbre de la roue; le collet lui-même monte respectivement pour chaque roue un palier en direction radiale par rapport à l'arbre de la roue, à partir duquel les quadrilatères des leviers des palettes respectifs sont mouvementés par le biais des couples coulisseaux-guides; le pivot virtuel du basculement de la cloche et l'articulation des actionnements pouvant être inversés dans leur positionnement, sauve l'efficacité du décentrement du collet coulisseaux-guides.

4. Machine selon la revendication 1 **caractérisée en ce que** la collet peut être mouvementé alternativement avec un système de coulisseaux glissant dans d'oeillets solidaires appropriés spécialement agencés dans la géométrie du collet, chaque collet étant articulé au centre avec un arbre disposé radialement et parallèle à l'axe centrale de la machine, lequel est solidaire d'un levier avec mouvement en arc sur un plan parallèle à celui de la roue, qui est à son tour solidaire et déplacée par un arbre à axe parallèle à l'axe central, articulé à un siège de la structure de la machine est pourvu d'un bras déplacé par un actionnement articulé à la structure de la machine.

5. Machine selon la revendication 1, **caractérisée en ce qu'**elle peut être aussi bien composée de plusieurs roues contrarotatives, avec comportement synergique des palettes dans le fluide; ceci combiné avec les vitesses angulaires appropriées de chaque roue minimise les effects réactifs, torsionnels et de dérive de la diréction, tout en faisant correspondre la poussée de quelconque entité sur l'axe de rotation.

6. Machine selon les revendications précédentes, **caractérisée en ce que** la système de levages consiste en un quadrilatère (24, 27), soit pour la palette (6) de la roue interne (4), soit pour celle de la roue externe (3), à chaque axe de palette (225) étant articulée une des extrémités d'un bras (226), l'autre extrémité duquel est articulée a une des extrémités d'une barre de liaison (227) l'autre extrémité de laquelle est articulée à une des extrémités d'un levier (228) articulé dans un point de pivotement (229) au fond de la roue respective (3, 4), le levier (228) étant articulé à balancier à un coulisseau (230) glissant dans un guide (231) solidaire de la bague ou collet (232) tournant sur le palier (220) .

7. Machine selon l'une des revendication précédentes, **caractérisée en ce que** le système d'actionnements (3) comprends des actionnements (351) qui présentent une tige de piston à l'extrémité libre de laquelle est articulée une des extrémités d'un bras (352), l'autre extrémité duquel est articulée sur un pivot (353) tournant dans une collerette (354) solidaire du corps de la machine, une extrémité du pivot (353) étant articulée à une des extrémités du bras (354) l'autre extrémité duquel est articulée à un pivot (355) accueilli dans un siège (356) solidaire de la cloche 17.

8. Machine selon l'une des revendications précédentes, **caractérisée en ce que** au fond de chaque roue (3, 4) est articulée une des extrémités d'un premier levier à genou (400) à l'autre extrémité duquel est articulée une première barre (401) à son tour articulés à une attache (402) qui est à son tour articulée à une oreille (403) solidaire de la bague (232), à l'attache (402) étant en outre articulé un premier levier d'orientation (404) articulé (405) au fond de la roue (3, 4), à l'attache (402) étant en outre articulée une deuxième barre (404) à son tour articulée à un deuxième levier en genou (407) auquel est articulé une des extrémités d'une troisième barre (408), l'autre extrémité de laquelle est articulée à un troisième levier en genou (409) auquel est articulée une quatrième barre (410) pivotante par rapport à une deuxième attache (411) à laquelle est en outre articulé un deuxième levier d'orientation (412) qui est pivotant par rapport à une deuxième oreille (413) solidaire de la bague (232) et à laquelle est articulée une cinquième barre (414) à son tour articulée à un quatrième levier en genou (415) qui est encore articulé audit premier levier en genou (400).
